# EUROPEAN PATENT APPLICATION

(11) **EP 2 579 581 A1**
(43) Date of publication of application: **10.04.2013**
(21) Application number: 12178469.8
(22) Date of filing: 30.07.2012
(51) Int. Cl.: H04N 5/44

(54) **Display aparatus and control method thereof**

(30) Priority: 07.10.2011 KR 20110102193
(71) Applicant: Samsung Electronics Co., Ltd., Suwon-si, Gyeonggi-do, 443-742 (KR)
(72) Inventor: Lee, Young-jin, Gyeonggi-do (KR)
(74) Representative: Clark, David James

(57) **Abstract**

A display apparatus and a control method thereof are provided. The display apparatus includes a display unit which displays an image; a signal receiver which receives a signal from a remote control device; a signal transmitter which transmits a signal to a controlled device; and a controller which sets an operation of the controlled device and an input of the remote control device that matches the operation, receives a first control signal corresponding to the set input from the remote control device and transmits a second control signal corresponding to the operation of the controlled device that matches the input to the controlled device.

## Description

### BACKGROUND

### Field

Apparatuses and methods consistent with exemplary embodiments relate to a display apparatus and a control method thereof, and more particularly, to a display apparatus and a control method thereof which receives a command from a remote control device regarding a controlled device.

### Description of the Related Art

A display apparatus such as a television (TV) receives a command from a remote control device such as a remote controller and operates according to the received command.

However, it is often advantageous to be able to manipulate other devices, e.g., a set-top box, a digital versatile disk (DVD) player, or an audio/video (AV) system as well as the display apparatus.

In the related art, each of the other devices has its own remote controller, and those remote controllers should be used to manipulate the other devices, which is very inconvenient for a user.

### SUMMARY

One or more exemplary embodiments provide a display apparatus and a control method thereof which enables a user to manipulate several controlled devices more conveniently.

According to an aspect of an exemplary embodiment, there is provided a display apparatus including a signal receiver which receives a signal from a remote control device; a signal transmitter which transmits a signal to at least one controlled device; and a controller which sets an operation of the controlled device and an input of the remote control device that matches the operation, receives a first control signal corresponding to the set input from the remote control device and transmits a second control signal corresponding to the operation of the controlled device that matches the input to the controlled device.

The controller may display on the display unit a user interface (UI) for matching the operation and the input.

The UI may include an operation list for the operation of at least one controlled device.

The remote control device may include at least one input key corresponding to the input, and the controller may set at least one input key that matches the operation, through the UI.

At least one of the signal receiver and the signal transmitter may be configured to use an infrared signal.

The display apparatus may further include a voice recognition unit which recognizes a user's voice, and the controller may set the operation of the controlled device and a voice command of the user's voice that matches the operation, recognize the voice command through the voice recognition unit and transmit the second control signal corresponding to the operation of the controlled device that matches the recognized voice command, to the controlled device.

According to an aspect of another exemplary embodiment, there is provided a control method of a display apparatus, the control method including setting an operation of at least one controlled device and an input of a remote control device that matches the operation; receiving a first control signal corresponding to the set input from the remote control device; and transmitting to the controlled device a second control signal corresponding to the operation of the controlled device that matches the input.

The setting may include displaying on a display unit a UI for matching the operation and the input.

The UI may include an operation list for operations of at least one controlled device.

The remote control device may include at least one input key corresponding to the input, and the setting may further include setting at least one input key that matches the operation, through the UI.

The control method may further include setting an operation of the controlled device and a voice command that matches the operation; and recognizing the voice command through a voice recognition of a user's voice and transmitting to the controlled device the second control signal corresponding to the operation of the controlled device that matches the recognized voice command.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a display apparatus, a remote control device and a controlled device according to an exemplary embodiment;
FIG. 2 is a block diagram of the display apparatus in FIG. 1;
FIG. 3 is a flowchart of a control method of the display apparatus in FIGS. 1 and 2;
FIG. 4 illustrates an example of a user interface (UI) for setting an operation matching for the controlled device;
FIG. 5 illustrates a specific example of a UI for matching a user input of the remote controlled device and an operation of the controlled device;
FIG. 6 illustrates a display apparatus, a remote control device and a controlled device according to another exemplary embodiment; and
FIG. 7 is a block diagram of the display apparatus in FIG. 6.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

Hereinafter, an exemplary embodiment will be described in detail.

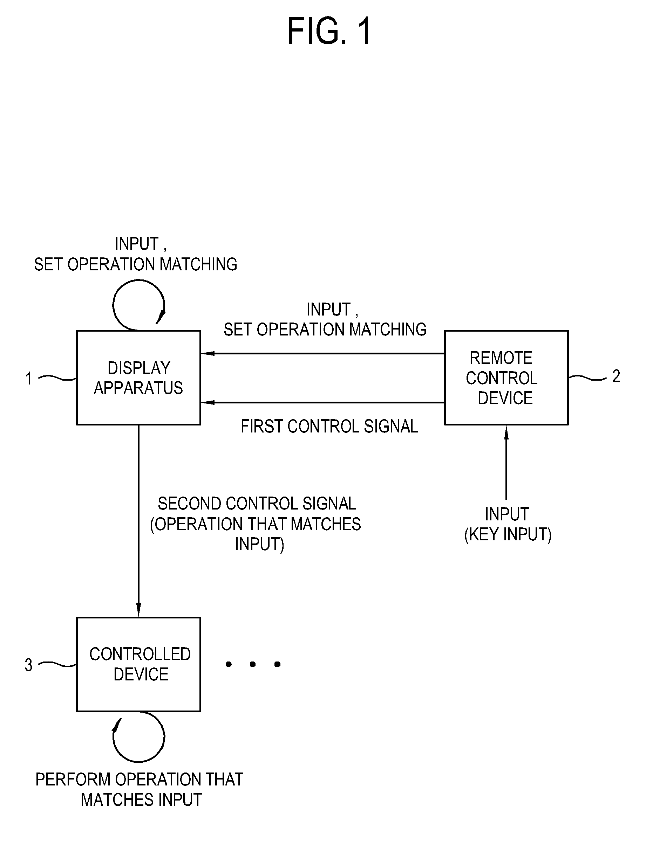

FIG. 1 illustrates a display apparatus, a remote control device and a controlled device according to an exemplary embodiment. The display apparatus 1 may include a TV which displays an image according to a broadcasting signal. The display apparatus 1 controls the controlled device 3 according to an input that is received through the remote control device 2 such as a remote controller. The controlled device 3 may be, for example, a set-top box, a DVD player or an AV system, but the controlled device 3 is not limited to these and any device that is capable of being controlled using signals is contemplated. Although one controlled device 3 is shown in FIG. 1, a plurality of controlled devices may be provided.

The display apparatus 1 matches an operation of the controlled device 3 and an input of the remote control device 2 (e.g., key input) in advance for controlling the controlled device 3. Upon receiving an input from the remote control device 2 (referred to as a 'first control signal' in FIG. 1) that is matched to an operation of the controlled device 3, the display apparatus 1 transmits a control signal (referred to as a 'second control signal' in FIG. 1) to the controlled device 3 so that the controlled device 3 performs an operation with respect to the controlled device 3 that matches the input of the remote control device 2.

Since at least one controlled device 3 may be manipulated by using one of the remote control devices 2 of the display apparatus 1, user convenience improves compared to the case where several remote controllers are used for each of the controlled devices 3. Further, since an input that matches the operation of the controlled device 3 may be set by the user, i.e., as a user sets an input which is easily used, user convenience improves compared to the case where commands are input by pressing complicated buttons of various remote controllers for each of the controlled devices 3.

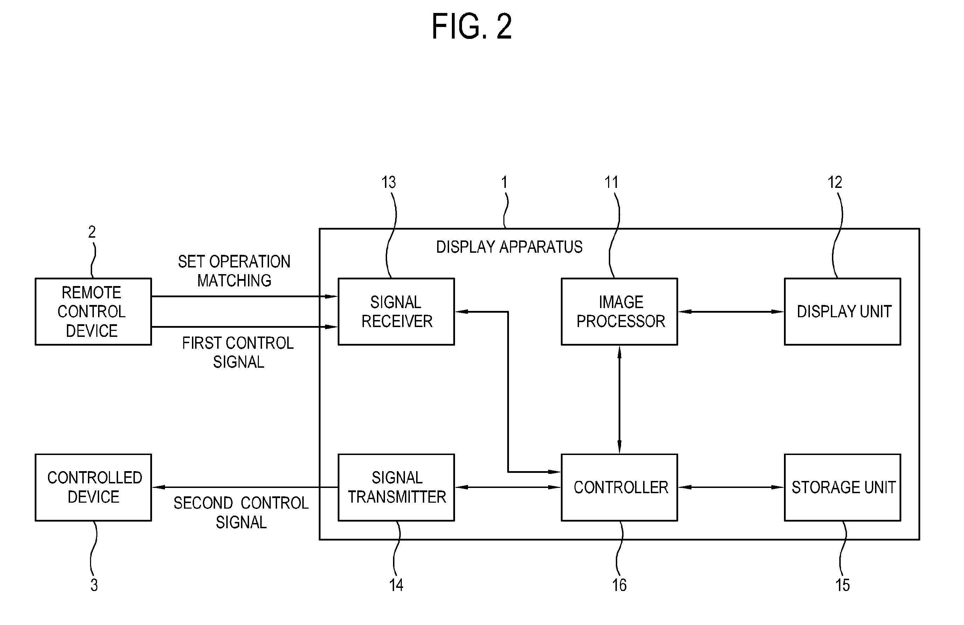

FIG. 2 is a block diagram of the display apparatus 1 in FIG. 1. As shown therein, the display apparatus 1 includes an image processor 11, a display unit 12, a signal receiver 13, a signal transmitter 14, a storage unit 15 and a controller 16.

The image processor 11 processes an image signal to display an image on the display unit 12 based on the image signal. The image signal includes a broadcasting signal such as a TV signal. The display apparatus 1 may further include a tuner (not shown) to receive a broadcasting signal. Otherwise, the image signal may be transmitted by a device such as a PC, a set-top box or a DVD player. To receive the image signal from the foregoing devices, the display apparatus 1 may further include a signal input unit (not shown). The image processor 11 may further process an image of a user interface (UI) such as a manipulation menu to display the image on the display unit 12.

The display unit 12 displays an image thereon based on an image signal that is processed by the image processor 11. The display unit 12 may include a liquid crystal display (LCD) or an organic light emitting diode (OLED), but is not limited thereto.

The signal receiver 13 receives a signal corresponding to an from the remote control device 2. The signal corresponding to the input may include a signal for a basic operation of the display apparatus 1, e.g., a channel adjustment signal, an operation matching signal for control of the controlled device 3 or a command signal for control of the controlled device 3 (first control signal). The signal receiver 13 receives a signal from the remote control device 2 by Bluetooth or infrared communication, but the communication type is not limited thereto. The signal corresponding to the input that is transmitted by the remote control device 2 is transmitted from the signal receiver 13 to the controller 16.

The signal transmitter 14 transmits to the controlled device 3 a signal for performance of an operation by the controlled device 3 ('second control signal'). The signal transmitter 14 may transmit the second control signal by Bluetooth or infrared communication, but the communication type is not limited thereto.

The storage unit 15 includes a non-volatile memory such as a flash memory, and stores thereon information on operation matching for control of the controlled device 3.

The controller 16 performs an overall control operation of the display apparatus 1, and may include one or more central processing units (CPUs). The controller 16 sets matching of an operation of the controlled device 3 and an input of the remote control device 2 for a control of the controlled device 3 through the signal receiver 13. Upon receiving an input (first control signal) from the remote control device 2 from the signal receiver 13, the controller 16 controls the signal transmitter 14 to transmit the second control signal corresponding to the matching operation, to the controlled device 3.

The controller 16 may include a control program to perform the foregoing control operation, a non-volatile memory (not shown) which stores therein the control program to perform the foregoing control operation, a volatile memory (not shown) which loads at least a part of the stored control program and a microprocessor (not shown) which executes the loaded control program.

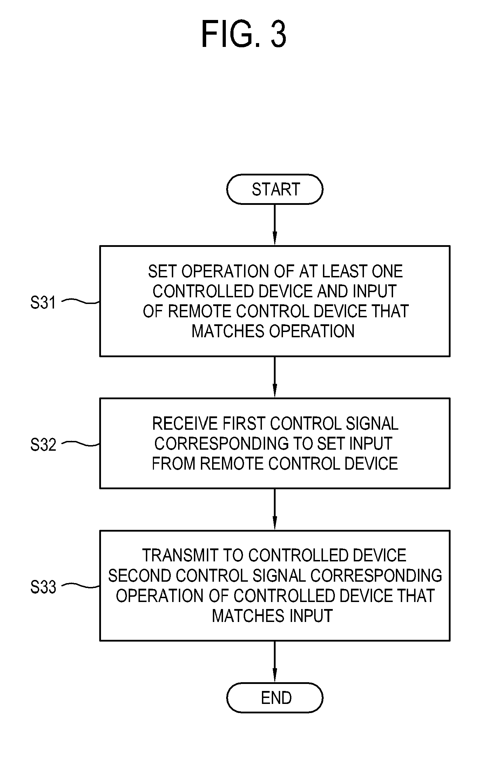

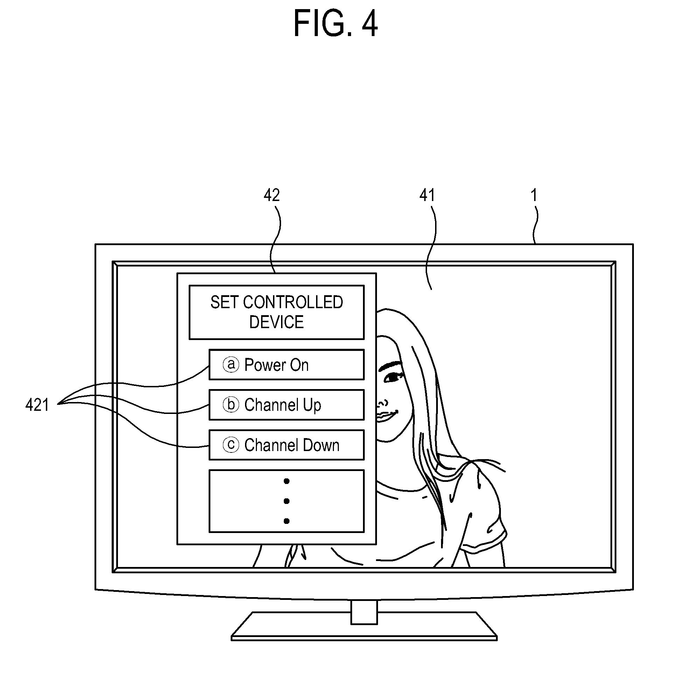

FIG. 3 is a flowchart of a control method of the display apparatus 1 in FIGS. 1 and 2. The display apparatus 1 sets the operation of at least one controlled device 3 and an input of the remote control device 2 from the user that matches the operation (S31). The display apparatus 1 may provide a user interface (UI) to set the operation matching of the controlled device 3. FIG. 4 illustrates an example of a UI for setting the operation matching of the controlled device 3. A UI 42 which is provided for setting the operation matching may include an operation list 421 for operations which may be performed by the controlled device 3 corresponding to the input of the remote control device 2. Operations which may be performed by the controlled device 3 corresponding to the input of the remote control device 2 may include, e.g., power-on, channel-up and channel-down operations if the controlled device 3 is a TV set-top box. The operations are not particularly limited, and may, in some instances, depend on the type of controlled device to be controlled. A user may select an operation for which an operation matching is set, from the operation list 421 by using the UI 42 for setting the operation matching.

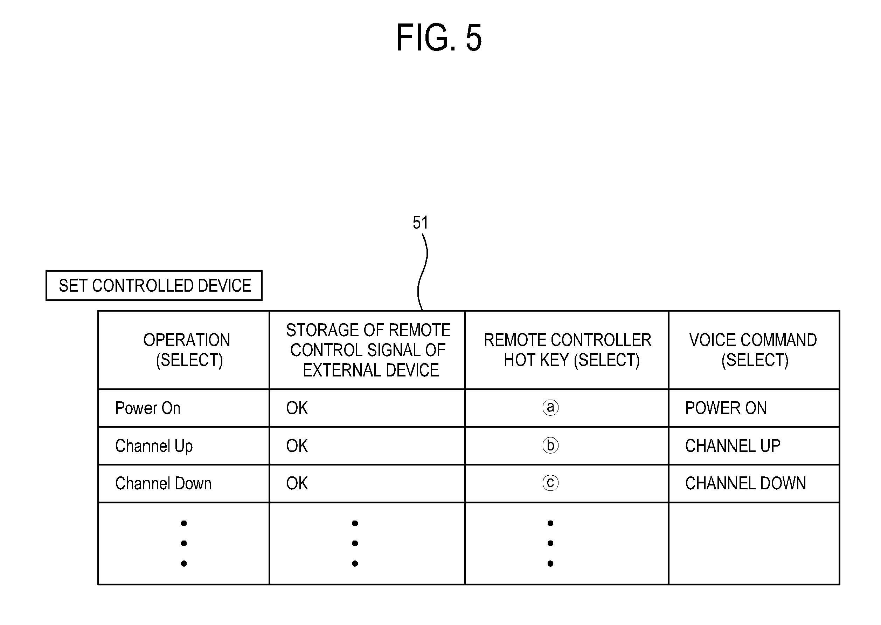

If an operation of the controlled device 3 is selected to set the operation matching, the display apparatus 1 may provide a UI to match an input of the remote control device 2 and the operation. FIG. 5 illustrates a specific example of a UI to match an input of the remote control device 2 and the operation of the controlled device 3. A user may match an input of the remote control device 2 and the operation of the controlled device 3 by using a UI 51. For example, any of a plurality of hot keys a, b, c, and the like provided in the remote control device 2 may be matched to a particular operation of the controlled device 3. More specifically, a power-on operation of the controlled device 3 may be matched to a hot key "a" of the remote control device 2, a channel-up operation of the controlled device 3 may be matched to a hot key "b" of the remote control device 2, and a channel-down operation of the controlled device 3 may be matched to a hot key "c" of the remote control device 2. Upon completion of matching the input of the remote control device 2 and the operation of the controlled device 3, the display apparatus 1 stores the matching setting in the storage unit 15.

Returning to FIG. 3, the display apparatus 1 receives from the remote control device 2 the first control signal corresponding to the matching input (S32). For example, the display apparatus 1 may receive the first control signal corresponding to an input of any of the matching hot keys a, b, c, and the like from the remote control device 2.

The display apparatus 1 refers to the matching setting stored in the storage unit 15, determines an operation of the controlled device 3 that matches the input of the received first control signal, and transmits to the controlled device 3 the second control signal corresponding to the operation (S33). For example, if the first control signal corresponding to the input of the hot key "a" is received from the remote control device 2, the display apparatus 1 transmits the second control signal corresponding to the matching power-on operation of the controlled device 3 to the controlled device 3.

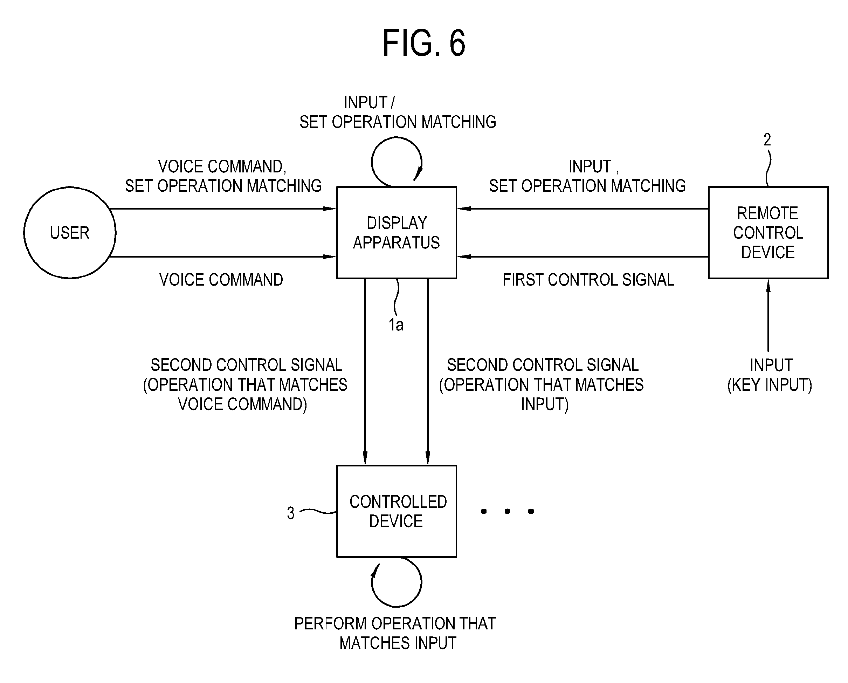

FIG. 6 illustrates a display apparatus, a remote control device and a controlled device according to another exemplary embodiment. In a display apparatus 1a in FIG. 6, matters which are the same as, or similar to, the configuration of the display apparatus 1 which has been described with reference to FIGS. 1 to 5 will not be described again. The display apparatus 1a sets a matching of the operation of the controlled device 3 with the user's input based on a user's voice. The display apparatus 1a matches a particular operation of the controlled device 3 and a user's voice command. If a user's voice command which matches the operation of the controlled device 3 is received later (refer to 'first control signal' in FIG. 6), the display apparatus 1a transmits a control signal (refer to 'second control signal' in FIG. 6) to the controlled device 3 so that the controlled device 3 performs the operation that matches the voice command.

As above, a user may manipulate at least one controlled device 3 by using his/her voice as well as the remote control device 2 of the display apparatus 1a, thus enhancing user convenience.

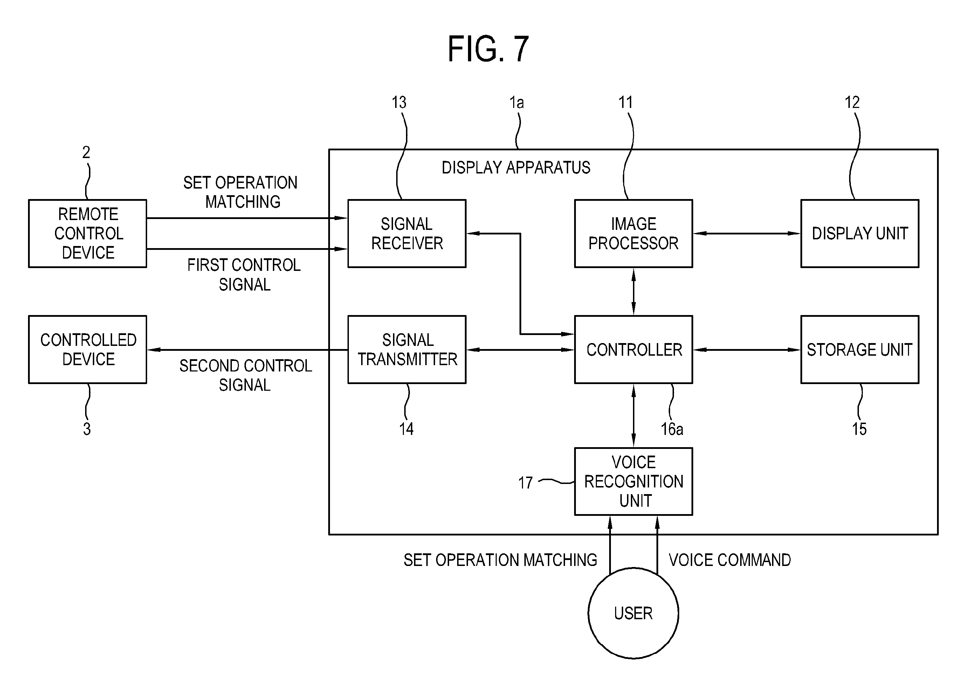

FIG. 7 is a block diagram of the display apparatus 1a in FIG. 6. As shown therein, the display apparatus 1a may include an image processor 11, a display unit 12, a signal receiver 13, a signal transmitter 14, a storage unit 15, a voice recognition unit 17 and a controller 16a.

The voice recognition unit 17 recognizes a user's voice and receives the user's voice as a voice command.

The controller 16a matches a voice command which is received through the voice recognition unit 17, and a particular operation of the controlled device 3. Referring to FIG. 5, if the controlled device 3 is a set-top box, during the matching operation the controller 16a may match a power-on operation of the controlled device 3 and a user's voice command 'set-top box power-on', match a channel-up operation of the controlled device 3 and a user's voice command 'set-top box channel-up', and match a channel-down operation of the controlled device 3 and a user's voice command 'set-top box channel-down'. If the matching of the user's voice command and the operation of the controlled device 3 is completed, the controller 16a stores the matching setting in the storage unit 15.

The display apparatus 1a receives a matching voice command from a user through the voice recognition unit 17. For example, the display apparatus 1a may receive the matching voice command 'set-top box power-on' from a user. The controller 16a refers to the matching setting stored in the storage unit 15, determines an operation of the controlled device 3 that matches the received user's voice command, and transmits to the controlled device 3 the second control signal corresponding to the operation. For example, upon receiving a voice command 'set-top box power-on' from a user, the controller 16a transmits to the controlled device 3 the second control signal corresponding to the matching power-on operation of the controlled device 3. Then, the controlled device 3 performs the operation, e.g., power-on operation corresponding to user's voice.

As described above, a display apparatus and a control method thereof enables a user to manipulate many controlled devices more conveniently by controlling the controlled devices by using a display apparatus and a remote control device.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit which displays an image;
a signal receiver which receives a signal from a remote control device;
a signal transmitter which transmits a signal to at least one controlled device; and
a controller which sets an operation of the controlled device and an input of the remote control device that matches the operation, receives a first control signal corresponding to the set input from the remote control device and transmits a second control signal corresponding to the operation of the controlled device that matches the input to the controlled device.

2. The display apparatus according to claim 1, wherein the controller displays on the display unit a user interface (UI) for matching the operation and the input.

3. The display apparatus according to claim 2, wherein the UI comprises an operation list of operations of at least one controlled device.

4. The display apparatus according to claim 2, wherein the remote control device comprises at least one input key corresponding to the input, and the controller sets at least one input key that matches the operation, through the UI.

5. The display apparatus according to one of claims 1 to 4, wherein at least one of the signal receiver and the signal transmitter is configured to use an infrared signal.

6. The display apparatus according to one of claims 1 to 5, further comprising a voice recognition unit which recognizes a user's voice,
wherein the controller sets the operation of the controlled device and a voice command of the user's voice that matches the operation, recognizes a voice command through the voice recognition unit and transmits the second control signal corresponding to the operation of the controlled device that matches the recognized voice command, to the controlled device.

7. A control method of a display apparatus, the control method comprising:
setting an operation of at least one controlled device and an input of a remote control device that matches the operation;
receiving a first control signal corresponding to the set input from the remote control device; and
transmitting to the controlled device a second control signal corresponding to the operation of the controlled device that matches the input.

8. The control method according to claim 7, wherein the setting comprises displaying on a display unit of the display apparatus a user interface (UI) for matching the operation and the input.

9. The control method according to claim 8, wherein the UI comprises an operation list of operations of at least one controlled device.

10. The control method according to claim 8, wherein the remote control device comprises at least one input key corresponding to the input, and
wherein the setting further comprises setting at least one input key that matches the operation, through the UI.

11. The control method according to one of claims 7 to 10, further comprising:
setting an operation of the controlled device and a voice command that matches the operation; and
recognizing the voice command through a voice recognition of a user's voice and transmitting to the controlled device the second control signal corresponding to the operation of the controlled device that matches the recognized voice command.
